# EUROPÄISCHE PATENTSCHRIFT

(11) **EP 1 363 178 B1**
(45) Veröffentlichungstag und Bekanntmachung des Hinweises auf die Patenterteilung: **15.06.2005**
(21) Anmeldenummer: 03008606.0
(22) Anmeldetag: 15.04.2003
(51) Int. Cl.: G05G 5/06

(54) **Schaltarretierung**
Retaining device
Dispositif d'arrêt

(30) Priorität: 17.05.2002 DE 10221976
(43) Veröffentlichungstag der Anmeldung: 19.11.2003
(73) Patentinhaber: INA-Schaeffler KG, 91074 Herzogenaurach (DE)
(72) Erfinder: Neudecker, Andreas, 91085 Weisendorf (DE); Mehlis, Thomas, 91093 Hessdorf (DE); Zettner, Herbert, 91074 Herzogenaurach (DE); Schacherl, Arnold, 91074 Herzogenaurach (DE); Schnapp, Peter, 90431 Nürnberg (DE); Staudigel, Erwin, 91315 Höchstadt (DE)

(56) Entgegenhaltungen:
- DE-A- 4 220 818
- DE-A- 4 430 922
- DE-A- 4 439 436

## Beschreibung

### Gebiet der Erfindung

Die Erfindung bezieht sich auf eine Schaltarretierung, die vorzugsweise für die Lagefixierung eines beweglichen Stellelementes, insbesondere einer Schaltstange für ein Schaltgetriebe von Kraftfahrzeugen eingesetzt ist. Die Schaltarretierung umfasst ein topfartiges bzw. hülsenartig geformtes Gehäuse, mit einem darin längs beweglichen Führungselement. Eine erste Stirnseite des Führungselementes wird dabei von einer Ausschiebefeder beaufschlagt, wobei sich die Ausschiebefeder gegenseitig an einem Gehäuseboden abstützt. An der gegenüberliegenden Seite des Führungselementes ist eine Rastkugel drehbar und verliergesichert gehalten, die im eingebauten Zustand der Schaltarretierung mit Rastausnehmungen des Schaltelementes zusammenwirkt. In einem radial von dem Gehäuse und dem Führungselement begrenzten Ringspalt ist eine Wälzlagerung eingesetzt, umfassend einen Käfig mit Ausnehmungen, zur Aufnahme von Wälzkörpern, die unmittelbar an der Mantelfläche des Führungselementes und der Innenwandung des Gehäuses geführt sind. An dem von dem Gehäuseboden abgewandten Ende ist das Gehäuse endseitig mit einem radial nach innen gerichteten Haltebund versehen, der einen Endanschlag für das Führungselement bildet.

### Hintergrund der Erfindung

Aus der DE 4439 436 A1 ist eine gattungsgemäße Schaltarretierung bekannt. Der Aufbau dieser Arretierung umfasst ein Gehäuse, dessen Innenwandung eine äußere Laufbahn für die Wälzkörper einer als Linearlagerung gestalteten Wälzlagerung bildet, die in einem Ringspalt zwischen dem Gehäuse und der Mantelfläche eines Führungselementes eingesetzt ist. Funktionsbedingt bewirkt die zwischen dem Führungsteil und dem Boden des Gehäuses eingesetzte Ausschiebefeder eine Verlagerung des Führungselementes aus dem Gehäuse. Zur Stellwegbegrenzung bzw. zur Erzielung einer Verliersicherung im nicht eingebauten Zustand der Schaltarretierung besitzt das Gehäuse an dem vom Gehäuseboden gegenüberliegenden Ende einen radial nach innen gerichteten Haltebord. Zur Komplettierung der Schaltarretierung werden alle vorgefertigten Einzelteile zusammengefügt. Bei dem Einschub des Führungselementes einschließlich der Wälzlagerung in das Gehäuse ist eine radiale Aufweitung des Haltebundes erforderlich, um ein Einschnappen der Wälzkörper in den Ringspalt zwischen dem Gehäuse und der Mantelfläche des Führungselementes zu gewährleisten. Dabei ist es erforderlich, dass alle Wälzkörper, d. h. Kugeln, gleichzeitig den nach innen gerichteten Haltebund bzw. Einschnappbord passieren. Dabei besteht die Gefahr einer bleibenden Deformation des Haltebundes oder des Gehäuses, was sich nachteilig auf die Funktion der Schaltarretierung auswirken kann.

Als Maßnahme, die Einpresskräfte zu verringern bietet es sich an, die Bundhöhe des Haltebundes zu verringern mit dem Nachteil, dass keine ausreichende gesicherte Halterung bzw. Fixierung des Führungselementes in dem Gehäuse gewährleistet ist.

### Aufgabe der Erfindung

Ausgehend von den Nachteilen der bekannten Lösung ist es Aufgabe der vorliegenden Erfindung, eine Schaltarretierung zu schaffen, deren Einzelteile einfach montierbar sind und das Führungselement in dem Gehäuse sicher fixiert ist.

### Zusammenfassung der Erfindung

Zur Lösung der Problemstellung ist gemäß der Erfindung vorgesehen, die Wälzkörper umfangsseitig in Ausnehmungen des Käfigs anzuordnen, die einerseits unmittelbar benachbart und andererseits versetzt zueinander angeordnet sind. Ergänzend oder alternativ sind die Ausnehmungen abweichend voneinander dimensioniert. Die Anordnung der Wälzkörper erfolgt so, dass diese eine Ringebene definieren. Diese Maßnahme bewirkt, dass beim Einschub des Führungselementes einschließlich der Wälzlagerung in das Gehäuse die einer Ringebene zugeordneten, als Kugeln ausgebildeten Wälzkörper, nicht gleichzeitig den verengten Ringspalt im Bereich des Haltebundes passieren müssen. Während bei der Montage eine erste Wälzkörperreihe bereits den Haltebund passiert und in den Ringspalt eingeführt ist, befinden sich aufgrund der voneinander abweichenden Lage oder der unterschiedlichen axialen Länge der Ausnehmungen, andere Wälzkörper vor dem verengten Durchmesser im Bereich des Haltebundes. Erst bei einem weiteren axialen Einschub des Führungselementes in das Gehäuse passieren auch die vorgelagerten restlichen Wälzkörper den Haltebund.

Die axial zueinander versetzt angeordneten Wälzkörper verringern entscheidend die erforderlichen Einschnappkräfte gegenüber bekannten Lösungen und vermeiden eine bleibende Deformation, beispielsweise des Gehäuse im Bereich des Haltebundes. Gleichzeitig besteht keine Rissgefahr, da keine überhöhten Spannungen bei der Montage des Führungselementes auftreten, im Gegensatz zu bisherigen Schaltarretierungen. Die Erfindung ermöglicht außerdem eine vergrößerte radiale Überdeckung zwischen einem von den Wälzkörpern bestimmten Hüllkreis und dem Innendurchmesser des Haltebundes. Die Bundhöhe des Haltebundes zur Gewährleistung eines sicheren Axialanschlages für das Führungselement in dem Gehäuse kann folglich vergrößert werden.

Alternativ zu axial zueinander versetzt angeordneten Wälzkörpern in den Käfigtaschen bzw. Ausnehmungen des Käfigs, schließt die Erfindung weiterhin ein, die benachbarten Ausnehmungen unterschiedlich zu dimensionieren. Vorzugsweise besitzen die Ausnehmungen eine unterschiedliche Länge. Diese Maßnahme ermöglicht durch eine entsprechende Zuordnung bzw. Lage bei der Montage, dass die Einschnappkräfte aufgrund eines gestuften Schnappvorgangs reduziert werden. Andererseits besteht die Möglichkeit, dass sich die Wälzkörper in einer Ringebene im eingebauten Zustand ausrichten können und damit eine gleichmäßige Kraftübertragung bzw. Krafteinleitung zwischen den Bauteilen gewährleistet ist, an denen die Wälzkörper unmittelbar geführt sind.

Eine vorteilhafte Ausgestaltung der Erfindung sieht vor, dass die jeweils unmittelbar benachbart zueinander angeordneten Ausnehmungen im Käfig, zur Aufnahme der Wälzkörper versetzt angeordnet sind. Diese Gestaltung ermöglicht in zwei Ringebenen angeordnete Wälzkörperbahnen, die ebenfalls eng benachbarte Kontaktlinien der Wälzkörper zwischen dem Führungselement und dem Gehäuse sicherstellen. Dazu bietet es sich an, den Versatz der Ausnehmungen so vorzusehen, dass dieser gleich oder größer dem Durchmesser der Wälzkörper entspricht.

Die erfindungsgemäße Schaltarretierung kann weiterhin so gestaltet werden, dass der Käfig zueinander versetzte, umfangsverteilt abwechselnd angeordnete Abschnitte einschließt, die eine Ringebene bilden. Jeder Abschnitt bildet wälzkörperfreie Zone, die von Zonen unterbrochen sind, in denen keine Wälzkörper eingesetzt sind. Dazu bietet es sich beispielsweise an, die einzelnen Abschnitte auf den Umfang übertragen symmetrisch, beispielsweise in Zonen schnitten von ≧ 60° anzuordnen.

Die erfindungsgemäße Schaltarretierung ermöglicht eine vergrößerte Radialüberdeckung zwischen dem Haltebund und den Wälzkörpern. Im Vergleich zu bisherigen Lösungen kann folglich aufgrund der axial gestuften Anordnung der im Käfig eingesetzten Wälzkörper eine größere radiale Überdeckung des Haltebundes gegenüber den Wälzkörpern erfolgen, was die Sicherung, d. h. die Halterung des Führungselementes in dem Gehäuse verbessert. Die Überdeckung beträgt vorteilhaft ≧ 10%.

Weiterhin ermöglicht die Erfindung, dass die im Käfig eingebrachten Ausnehmungen zur Aufnahme der Wälzkörper zueinander unterschiedlich lang ausgebildet sind. Diese Maßnahme bewirkt bei einer lageorientierten Anordnung des Führungselementes ein vereinfachtes Einschnappen der Wälzlagerung in das Gehäuse. In einer vertikalen Lage, in der die Wälzkörper jeweils an den Enden, den Stirnseiten der Ausnehmungen anliegen, stellt sich ein gewünschter axial gestufter Einschub der Wälzkörper in den Ringspalt zwischen dem Führungselement und dem Haltebund des Gehäuse ein.

In vorteilhafter Weise ist die axiale Länge der jeweiligen Ausnehmung zur Aufnahme der Wälzkörper so ausgelegt, dass über die gesamte Stellbewegung des Führungselementes die Wälzkörper während der Stellbewegung ausschließlich seitlich geführt werden. Eine Anlage der Wälzkörper an den stirnseitigen Rändern der Ausnehmungen findet daher nicht statt. Dabei genügt es, dass die axiale Länge der Ausnehmungen gegenüber dem Hubweg des Führungselementes nur geringfügig größer ausgelegt ist. Diese Maßnahme optimiert das Stellvermögen der Schaltarretierung, aufgrund einer verringerten Reibkraft, da sich die Wälzkörper bei jeder Hubbewegung schlupffrei verdrehen, was insbesondere bei einer hohen Schaltfrequenz von Vorteil ist.

Weiterhin schließt die Erfindung einen Käfig ein, bei der umfangsverteilt in einem Wechsel Ausnehmungen in dem Käfig eingebracht sind, welche unmittelbar dem Durchmesser der Wälzkörper angepasst sind und Ausnehmungen mit einer Länge die dem Hubweg des Führungselementes entspricht. Diese Käfigauslegung stellt einen Kompromiss dar zwischen einer definierten Anordnung von Wälzkörpern in einer Ringebene zu Wälzkörpern, die sich in der Ausnehmung frei verlagern können.

Als eine weitere vorteilhafte Maßnahme, um das Einschnappen zu vereinfachen, ist erfindungsgemäß vorgesehen, den Endanschlag des Gehäuses mit einem nach außen gerichteten Radius zu versehen, der das Einführen der Wälzkörper in den Ringspalt vereinfacht.

### Kurze Beschreibung der Zeichnungen

Ausführungsbeispiele der Erfindung werden anhand der beigefügten Zeichnungen nachstehend erläutert. Es zeigen:
- Figur 1: einen Ausschnitt einer Schaltarretierung, der die wesentlichen Merkmale der Erfindung verdeutlicht;
- Figur 2: in einer Einzelteilzeichnung den Käfig einer für die Schaltarretierung bestimmten Wälzlagerung;
- Figur 3: ein zu Figur 2 alternativ gestalteter Käfig, bei dem die Wälzkörper abschnittsweise in unterschiedlichen Ringebenen angeordnet sind;
- Figur 4: eine weitere Variante eines erfindungsgemäßen Wälzlagerkäfigs;
- Figur 5: in einer halben Ansicht einen Wälzlagerkäfig, dessen Ausnehmungen zur Aufnahme der Wälzkörper eine axiale Länge aufweisen, die an die Hubbewegung des Führungselementes angepasst ist;
- Figur 6: einen Wälzkörperkäfig, bei dem die benachbarten Ausnehmungen für die Wälzkörper unterschiedlich gestaltet sind; diese Ausfürungsform gehört nicht zum Gegenstand der Erfindung nach Anspruch 1.
- Figur 7: den Längsschnitt einer Schaltarretierung nach bekannter Bauart.

### Detaillierte Beschreibung der Zeichnungen

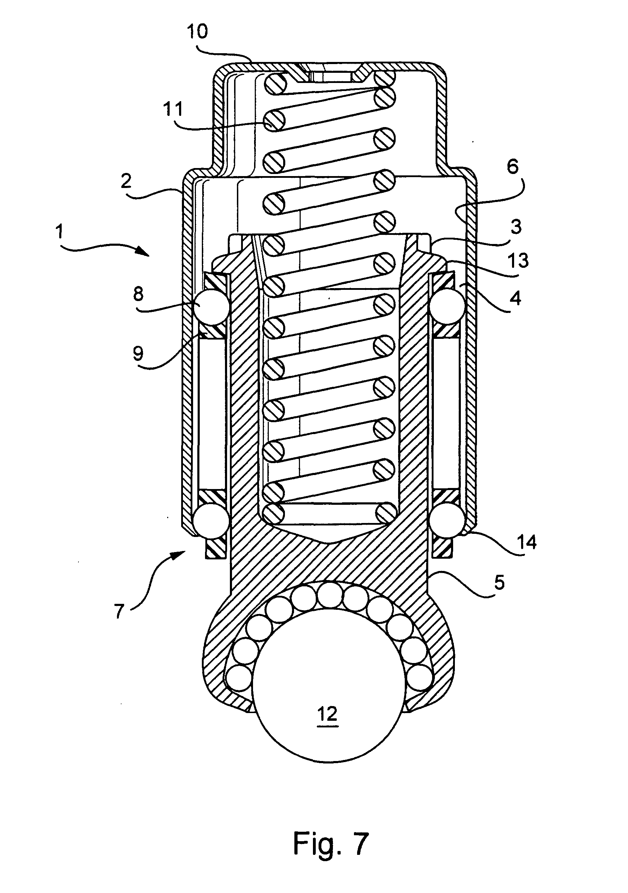

Zur Verdeutlichung der Funktion und des Aufbaus einer Schalteinrichtung wird zunächst die Figur 7 beschrieben, die in einem Längsschnitt den Aufbau einer bekannten, beispielsweise in Schaltgetrieben eingesetzten Schaltarretierung zeigt.

Die Schaltarretierung 1 umfasst ein topfartig bzw. hülsenartig gestaltetes Gehäuse 2, das vorzugsweise spanlos aus Blech geformt ist, und in dem ein Führungselement 3 längsverschiebbar eingesetzt ist. Eine Wälzlagerung 7 ist in einem Ringspalt 4 eingesetzt, der radial von einer Mantelfläche 5 des Führungselementes 3 und einer Innenwandung 6 des Gehäuses 2 begrenzt ist. Als Kugeln geformte, einer Ringebene 20 zugeordnete Wälzkörper 8, sind axial beabstandet zueinander jeweils in Endzonen eines Käfigs 9 eingesetzt. Zwischen einem Gehäuseboden 10 und dem Führungselement 3 ist eine Ausschiebefeder 11 eingesetzt, welche eine Axialkraft in eine vom Gehäuseboden 10 abgewandte Richtung ausübt. Auf der von der Ausschiebefeder 11 abgewandten Seite ist in dem Führungselement 3 eine Rastkugel 12 drehbar und verliergesichert gehalten, die im eingebauten Zustand, beispielsweise in Ausnehmungen eines Stellelementes verrastet. Die Wälzlagerung 7 ist an einem radial nach außen gerichteten, umlaufenden Bord 13 des Führungselementes 3 positioniert.

Zur Hubbegrenzung des Führungselementes 3 sowie der Wälzlagerung 7 dient ein Endanschlag 14, ausgebildet als ein radial nach innen gerichteter, umlaufender Haltebund. Die Komplettierung aller vorgefertigten Einzelteile, d. h. das Einsetzen des Führungselementes 3 in Verbindung mit der Wälzlagerung 7 in das Gehäuse 2 ist nur dann möglich, wenn der bereits angeformte Endanschlag 14 eine geringe radiale Überdeckung gegenüber dem Außendurchmesser der Wälzlagerung im Bereich der Wälzkörper 8 aufweist. Die in einer Ringebene des Käfigs 9 angeordneten Wälzkörper 8 erfordern bei der Montage des Führungselementes 3 ein gleichzeitiges radiales Aufweiten des Gehäuses 2 im Bereich des Endanschlages 14. Dabei kann es zu bleibenden Deformationen kommen oder zu einer Zerstörung, d. h. einer Rissbildung des Gehäuses 2. Alternativ kann der Endanschlag 14 nach eingesetztem Führungselement 3 angeformt werden, was jedoch nachteilig einen weiteren die Montagekosten erhöhenden Arbeitsgang erfordert.

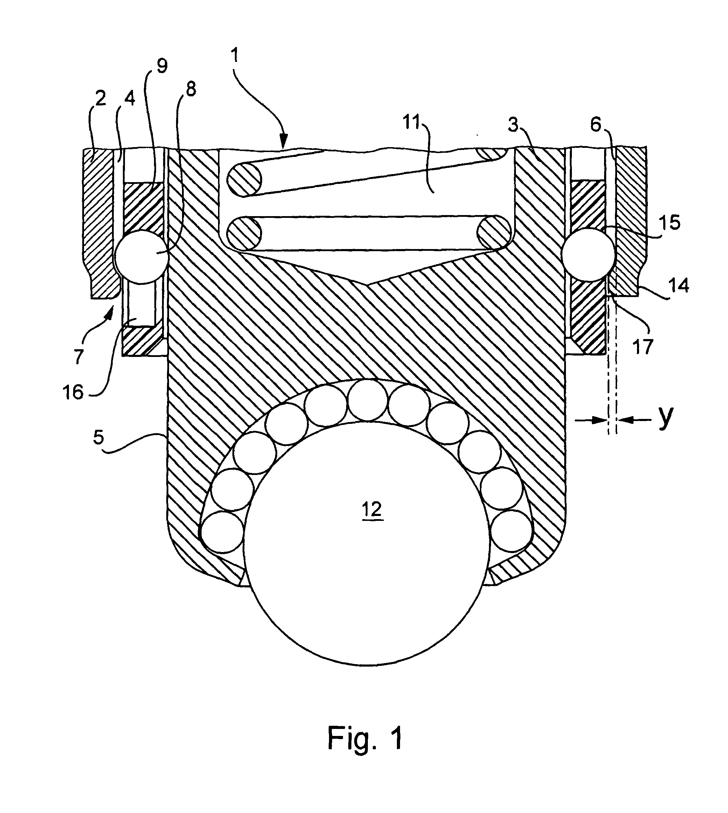

Die Figur 1 zeigt eine erfindungsgemäße Maßnahme, die eine Montage aller vorgefertigten Einzelteile der Schaltarretierung 1 ermöglicht, ohne die Gefahr einer Zerstörung bzw. Deformation des Gehäuses 2. Dazu ist der Käfig 9 zur Aufnahme der Wälzkörper 8 mit geometrisch unterschiedlich gestalteten Ausnehmungen 15, 16 versehen, die einer Ringebene 20 zugeordnet sind. Die Ausnehmung 16 besitzt eine axiale Erstreckung, die weitestgehend angepasst ist an den Durchmesser der Wälzkörper 8. Dagegen weist die Ausnehmung 16 eine vergrößerte Längserstreckung auf, die beispielsweise dem doppelten Durchmesser der Wälzkörper 8 entspricht. Bei einer vertikalen Montage, die eine selbsttätige Verlagerung der Wälzkörper 8 bis an die jeweilige Stirnseite bzw. den Rand der Ausnehmungen 15, 16 bewirkt, ergeben sich Wälzkörperpositionen in Grenzpositionen der Ringebene 20 des Käfigs 9.

Folglich ist beim Einschub des Führungselementes 3 in Verbindung mit der Wälzlagerung 7 keine gleichzeitige radiale Aufweitung des Endanschlages 14 über den gesamten Umfang des Gehäuses 2 erforderlich, sondern eine versetzte radiale Aufweitung. Diese Maßnahme hat zur Folge, dass alle Einzelteile der Schaltarretierung 1 vorgefertigt zerstörungsfrei montiert werden können. Gleichzeitig stellt sich eine für den sicheren Halt des Führungselementes 3 erforderliche ausreichende radiale Überdeckung ein. Diese durch den Buchstaben "Y" gekennzeichnete Überdeckung ist durch ein Differenzmaß definiert, dass sich zwischen der Außenkontur der Wälzkörper 8 und dem Innendurchmesser des Gehäuses 2 im Bereich des Endanschlages 14 einstellt. Als Maßnahme, die Verschnappung der Wälzkörper 8 an dem Endanschlag 14 zu vereinfachen, bildet der Endanschlag 14 einen nach außen gerichteten Radius 17.

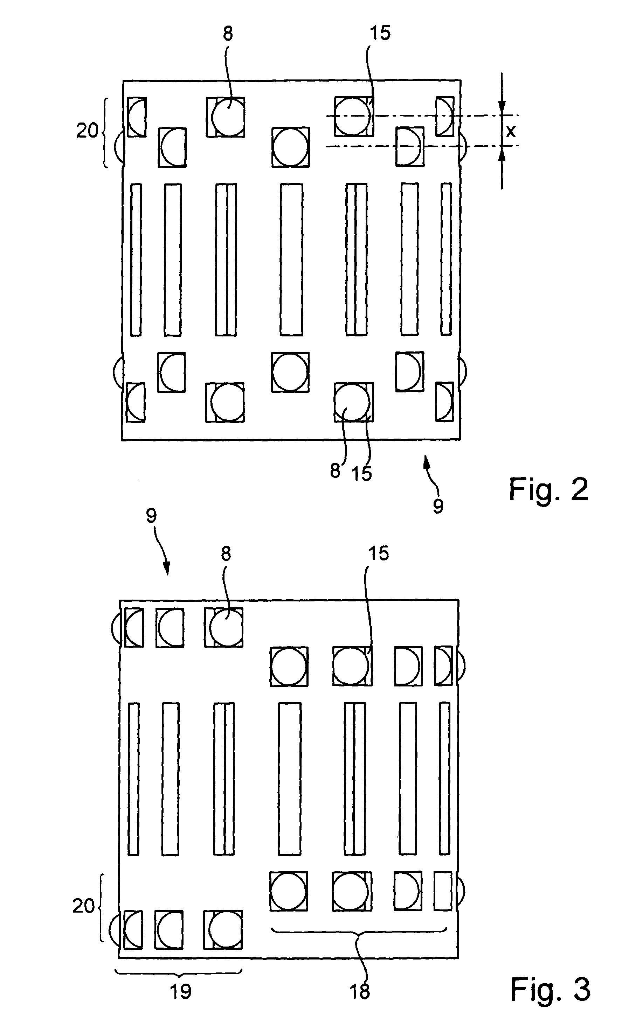

Die Figur 2 zeigt den Käfig 9, bei dem die umfangsverteilt in den Ausnehmungen 15 angeordneten Wälzkörper 8 in axial voneinander getrennten Bereichen angeordnet sind, die gemeinsam die Ringebene 20 definieren. Die Wälzkörper 8 sind dabei im Wechsel jeweils um das Maß "X" axial versetzt. Vorzugsweise übertrifft das Maß "X" das Durchmessermaß der Wälzkörper 8. Damit ist gewährleistet, dass sich das Gehäuse 2 im Bereich des Endanschlages 14 während des Einschnappens elastisch verformen kann und damit eine bleibende Deformation oder Rissbildung des Gehäuses 2 unterbleibt.

Die Figur 3 zeigt den Käfig 9, bei dem die Ringebene 20 ebenfalls Wälzkörper 8 einschließt, die jeweils axial zueinander angeordnet sind. Im Unterschied zu Figur 2 bildet der Käfig 9 auf den Umfang bezogen, wechselweise axial versetzt angeordnet Abschnitte 18, 19 mit jeweils gleich lagepositionierten Wälzkörpern 8, die gemeinsam die Ringebene 20 bilden. Umfangsbezogen bietet es sich an, den Käfig 9 mit einer symmetrischen Aufteilung von Abschnitten 18 und Abschnitten 19 zu versehen, die jeweils beispielsweise einen Winkel von 60° einschließen.

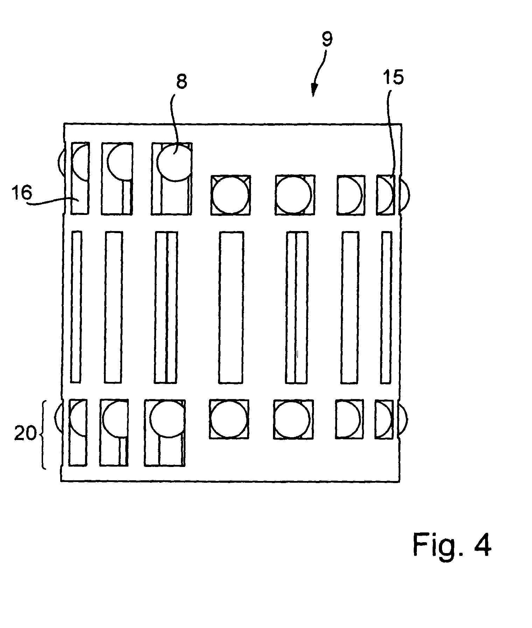

Der Käfig 9 gemäß Figur 4, versehen mit den Ausnehmungen 15, 16 entspricht der in Figur 1 abgebildeten Käfigvariante. Vergleichbar der Figur 3 sind die Ausnehmungen 15 bzw. 16 segmentartig über den Umfang des Käfigs 9 betrachtet in verschiedenen Abschnitten angeordnet, die gemeinsam die Ringebene 20 bilden.

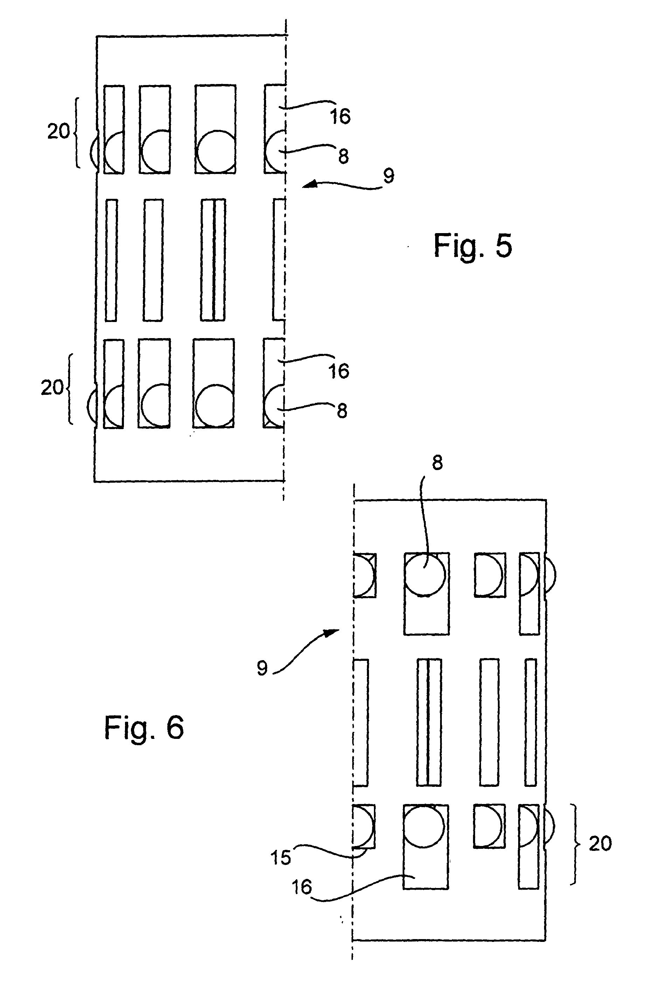

Die Figur 5 zeigt den Käfig 9 mit übereinstimmend über den gesamten Umfang des Käfigs 8 betrachtet gleichdimensionierten Ausnehmungen 16, deren axiale Länge den maximalen Hubweg bzw. Stellweg des Führungselementes 3 übertrifft. Zur Vermeidung einer gleichzeitigen Verschnappung aller Wälzkörper 8 bietet es sich beispielsweise an, ein Hilfswerkzeug zu verwenden, dessen Finger in jede zweite Ausnehmung 16 eingreifen und die Wälzkörper 8 an den vorderen Rand der Ausnehmung 16 verlagern. Damit kann ein axialer Versatz der Wälzkörper 8 erzielt werden. Nach dem Einschnappen der vorgelagerten Wälzkörper 8 in das Gehäuse 2 und dem Entfernen des Hilfswerkzeuges verschnappen bei einer weiteren Axialverschiebung des Führungselementes 3 auch die übrigen Wälzkörper 8 in das Gehäuse 2. Diese Ausfürungsform gehört nicht zum Gegenstand der Erfindung nach Anspruch 1.

In Figur 6 ist der Käfig 9 mit Ausnehmungen 15, 16 versehen, die im Wechsel nebeneinander angeordnet sind und die ebenfalls bei der Montage ein zweistufiges Verschnappen der Wälzkörper 8 in das Gehäuse 2 ermöglichen.

### Bezugszahlenliste

- 1: Schaltarretierung
- 2: Gehäuse
- 3: Führungselement
- 4: Ringspalt
- 5: Mantelfläche
- 6: Innenwandung
- 7: Wälzlagerung
- 8: Wälzkörper
- 9: Käfig
- 10: Gehäuseboden
- 11: Ausschiebefeder
- 12: Rastkugel
- 13: Bord
- 14: Endanschlag
- 15: Ausnehmung
- 16: Ausnehmung
- 17: Radius
- 18: Abschnitt
- 19: Abschnitt
- 20: Ringebene

## Patentansprüche

1. Schaltarretierung, die vorzugsweise für die Lagefixierung eines beweglichen Stellelementes, insbesondere einer Schaltstange für ein Schaltgetriebe von Kraftfahrzeugen eingesetzt ist, umfassend ein topfartiges bzw. hülsenartiges Gehäuse (2), mit einem darin begrenzt längs beweglichen Führungselement (3), das an einer Seite von einer Ausschiebefeder (11) beaufschlagt ist, die sich gegenseitig an einem Gehäuseboden (10) abstützt und an der weiteren Stirnseite des Führungselementes (3) eine Rastkugel (12) drehbar und verliergesichert gehalten ist, die mit Rastausnehmungen des Schaltelementes zusammenwirkt und ein radial von dem Gehäuse (2) und dem Führungselement (3) begrenzter Ringspalt (4) für eine Wälzlagerung (7) bestimmt ist, die einen Käfig (9) mit Ausnehmungen (15, 16) aufweist, zur Aufnahme von Wälzkörpern (8) und das Gehäuse (2) endseitig einen Haltebund aufweist, der einen Endanschlag (14) für das Führungselement (3) bildet, **dadurch gekennzeichnet, dass** die Wälzkörper (8) umfangsseitig in einerseits unmittelbar benachbart und andererseits versetzt zueinander oder in abweichend voneinander dimensionierten Ausnehmungen (15, 16) des Käfigs (9) angeordnet sind, wobei die Wälzkörper (8) gemeinsam eine Ringebene (20) definieren und die eine axial gestufte Verschnappung der Wälzkörper (8) in das Gehäuse (2) sicherstellen.

2. Schaltarretierung nach Anspruch 1, deren Wälzkörper (8) in Ausnehmungen (15, 16) des Käfigs (9) angeordnet sind und dabei die Wälzkörper (8) jeweils um ein den Durchmesser der Wälzkörper (8) übertreffendes Maß "X", abwechselnd zueinander versetzt sind.

3. Schaltarretierung nach Anspruch 1, bei der die Ringebene (20) des Käfigs (9) axial zueinander versetzte, umfangsverteilt abwechselnd angeordnet Abschnitte (18, 19) einschließt, wobei jeder Abschnitt (18, 19) wälzkörperfreie Zonen aufweist, an die sich Zonen anschließen, in denen Wälzkörper (8) eingesetzt sind.

4. Schaltarretierung nach Anspruch 1, wobei der Endanschlag (14) des Gehäuses (2) so ausgeführt ist, dass sich in einer Einbaulage eine radiale Überdeckung zwischen einem Innendurchmesser des Endanschlages (14) und einer Außenkontur der Wälzkörper (8) von ≧ 10% einstellt.

5. Schaltarretierung nach Anspruch 1, bei der die Ausnehmungen (15, 16) des Käfigs (9) zueinander unterschiedliche Länge aufweisen.

6. Schaltarretierung nach Anspruch 1, wobei eine axiale Länge der Ausnehmungen (15, 16) in dem Käfig (9) eine Länge aufweisen, die einen maximalen Stellweg des Führungselementes (3) übertreffen.

7. Schaltarretierung nach Anspruch 1, deren Käfig (9) Ausnehmungen (16) vergrößerter axialer Länge aufweist, die in einem Wechsel zu Ausnehmungen (15) angeordnet sind, deren Länge dem Durchmesser der Wälzkörper (8) angepasst ist.

8. Schaltarretierung nach Anspruch 1, wobei der Endanschlag (14) des Gehäuses (2) einen nach außen gerichteten Radius (17) aufweist.

## Claims

1. Shift lock, which is used preferably for fixing in position a movable actuating element, in particular a shift rod for a shift transmission of motor vehicles, comprising a pot-like or sleeve-like housing (2), with a guide element (3) which is movable longitudinally to a limited extent in the latter and is acted upon on one side by a push-out spring (11) which is supported on the opposite side on a housing bottom (10), there being held rotatably and captively on the further end face of the guide element (3) a latching ball (12) which cooperates with latching recesses of the shift element, and an annular gap (4) delimited radially by the housing (2) and the guide element (3) being intended for a rolling mounting (7) which has a cage (9) with recesses (15, 16) for the reception of rolling bodies (8), and the housing (2) having on the end face a holding collar which forms a limit stop (14) for the guide element (3), **characterized in that** the rolling bodies (8) are arranged circumferentially in recesses (15, 16) of the cage (9) which are dimensioned so as to be, on the one hand, directly adjacent to one another and, on the other hand, offset to one another or are dimensioned differently to one another, the rolling bodies (8) jointly defining an annular plane (20) and ensuring an axially stepped snapping of the rolling bodies (8) into the housing (2).

2. Shift lock according to Claim 1, the rolling bodies (8) of which are arranged in recesses (15, 16) of the cage (9), and in this case the rolling bodies (8) are offset to one another alternately in each case by an amount "X" exceeding the diameter of the rolling bodies (8).

3. Shift lock according to Claim 1, in which the annular plane (20) of the cage (9) includes portions (18, 19) offset axially to one another and arranged alternately in circumferential distribution, each portion (18, 19) having zones which are free of rolling bodies and are followed by zones in which rolling bodies (8) are inserted.

4. Shift lock according to Claim 1, the limit stop (14) of the housing (2) being designed in such a way that, in an installation position, a radial overlap between an inside diameter of the limit stop (14) and an outer contour of the rolling bodies (8) of ≥ 10% is established.

5. Shift lock according to Claim 1, in which the recesses (15, 16) of the cage (9) have a different length with respect to one another.

6. Shift lock according to Claim 1, the recesses (15, 16) in the cage (9) having an axial length which exceeds a maximum actuation travel in the guide element (3).

7. Shift lock according to Claim 1, the cage (9) of which has recesses (16) of enlarged axial length, which are arranged in alternation with recesses (15), the length of which is adapted to the diameter of the rolling bodies (8).

8. Shift lock according to Claim 1, the limit stop (14) of the housing (2) having an outwardly directed radius (17).

## Revendications

1. Dispositif d'arrêt, qui est utilisé de préférence pour la fixation en position d'un élément de commande mobile, notamment d'une tringle de commande pour une boîte de vitesses de véhicules automobiles, comprenant un boîtier (2) du genre pot ou du genre manchon, avec un élément de guidage (3) qui peut se déplacer longitudinalement de manière limitée dans ce boîtier et qui est sollicité sur un côté par un ressort (11) de poussée vers l'extérieur, ressort qui s'appuie sur le côté opposé contre un fond de boîtier (10), et une bille de crantage (12) étant maintenue à rotation et de manière imperdable sur l'autre côté frontal de l'élément de guidage (3), bille qui coopère avec des évidements de crantage de l'élément de commande, et un passage annulaire (4) délimité radialement par le boîtier (2) et par l'élément de guidage (3) étant destiné à un palier à roulement (7) qui présente une cage (9) avec des évidements (15, 16) pour recevoir des corps de révolution (8), et le boîtier (2) présentant terminalement un collet de retenue qui forme une butée de fin de course (14) pour l'élément de guidage (3), **caractérisé en ce que** les corps de révolution (8) sont disposés périphériquement dans des évidements (15, 16) de la cage (9) qui sont d'une part directement voisins et d'autre part mutuellement décalés ou qui sont de dimensions différentes, sachant que les corps de révolution (8) définissent conjointement un plan annulaire (20), et un enclenchement axialement échelonné des corps de révolution (8) dans le boîtier (2) étant ainsi garanti.

2. Dispositif d'arrêt selon la revendication 1, dont les corps de révolution (8) sont disposés dans des évidements (15, 16) de la cage (9) et les corps de révolution (8) sont respectivement alternativement décalés les uns par rapport aux autres d'une dimension « X » qui est supérieure au diamètre des corps de révolution (8).

3. Dispositif d'arrêt selon la revendication 1, dans lequel le plan annulaire (20) de la cage (9) inclut des parties (18, 19) axialement mutuellement décalées et alternativement disposées en étant réparties sur la circonférence, sachant que chaque partie (18, 19) présente des zones dépourvues de corps de révolution, auxquelles se raccordent des zones dans lesquelles sont installés les corps de révolution (8).

4. Dispositif d'arrêt selon la revendication 1, sachant que la butée de fin de course (14) du boîtier (2) est réalisée de telle sorte que, dans une position d'installation, un recouvrement radial ≥ 10% se règle entre un diamètre intérieur de la butée de fin de course (14) et un contour extérieur des corps de révolution (8).

5. Dispositif d'arrêt selon la revendication 1, dans lequel les évidements (15, 16) de la cage (9) présentent des longueurs différentes.

6. Dispositif d'arrêt selon la revendication 1, sachant qu'une longueur axiale des évidements (15, 16) dans la cage (9) présente une longueur qui est supérieure à une course maximale de déplacement de l'élément de guidage (3).

7. Dispositif d'arrêt selon la revendication 1, dont la cage (9) présente des évidements (16) de longueur axiale augmentée qui sont disposés en alternance avec des évidements (15) dont la longueur est adaptée au diamètre des corps de révolution (8).

8. Dispositif d'arrêt selon la revendication 1, sachant que la butée de fin de course (14) du boîtier (2) présente un rayon (17) dirigé vers l'extérieur.
